(19) Europäisches Patentamt
European Patent Office
Office européen des brevets

(11) Publication number: **0 084 714 A1**

(12) **EUROPEAN PATENT APPLICATION**

(21) Application number: 82306458.9

(22) Date of filing: 03.12.82

(51) Int. Cl.³: C 09 D 11/00

(30) Priority: 11.12.81 JP 200478/81
25.01.82 JP 10726/82

(43) Date of publication of application: 03.08.83
Bulletin 83/31

(84) Designated Contracting States: DE FR GB

(71) Applicant: KONISHIROKU PHOTO INDUSTRY CO. LTD.,
No. 26-2, Nishishinjuku 1-chome Shinjuku-ku,
Tokyo 160 (JP)

(72) Inventor: Kitamura, Shigehiro, 2-5-19, Owada-cho,
Hachioji-shi Tokyo (JP)
Inventor: Abe, Takao, 2-10-9, Okusawa, Setagaya-ku
Tokyo (JP)

(74) Representative: Brock, Peter William et al, Michael
Burnside & Partners 2 Serjeants' Inn Fleet Street,
London EC4Y 1HL (GB)

(54) **Ink composition for ink jet printing.**

(57) If an ink for ink jet printing comprising water and a water soluble direct or acid dye additionally contains at least 20% by weight of a compound of formula [I]

$$C_nH_{2n+1}-(OCH_2CH_2)_m-OH$$

wherein $2 \leqq m \leqq 6$, and $m+1 \leqq n \leqq m+3$

the composition will be protected from evaporating and clogging a printing nozzle, while drying rapidly once it has been printed on to paper.

EP 0 084 714 A1

# INK COMPOSITION FOR INK JET PRINTING

This invention relates to an ink composition for ink jet printing. More particularly, the invention pertains to an ink composition for ink jet printing, which composition exhibits quick drying performance when used in recording pieces of information therewith on a sheet of ordinary paper and which is especially suitable for use in an ink jet printing process where ink is extruded through nozzles to project onto the sheet by the action of sudden reduction of an inner volume of an ink chamber.

The ink jet printing process, according to which an ink liquid is jetted under control onto a recording carrier to print desired information thereon without bringing a printing head into contact with the surface of the recording carrier, has heretofore been adopted by end printers and out rapidly into wide use in recent years for such reasons that the recording can be performed without noise and at high speed, and that sheets of ordinary paper can be used as recording sheets necessary for the recording.

Ink jet printing process generically known heretofore includes in the concrete an ink jet printing process wherein an ink liquid is projected through nozzles by rapidly reducing an inner volume of an ink chamber or by extrusion of suction at a

definite pressure, an ink jet printing process wherein an ink liquid is spurted statically and acceleratedly by applying a signal voltage between nozzles and electrodes standing opposite to each other, or an ink mist process wherein a mist of ink is generated by vibration of supersonic waves.

Ink compositions which are used in the ink jet printing processes of the above types or in the ink mist printing process are required to have such characteristics as mentioned below:

i) The ink composition should have sufficient density necessary for the performance of recording,

ii) it does not evaporate to dryness (clogging) within jet nozzles,

iii) the ink liquid drops as attached to a recording sheet to form characters of information quickly dry (quick drying performance),

iv) the recorded ink does not blot when brought into contact with water or sweat and printed portions formed said recorded ink do not disappear therewith, and

v) the composition, when stored, does not undergo any change in its physical properties or does not produce any precipitate.

As a measure of satisfying quick drying of ink adopted heretofore, there is known a process wherein such ink which is difficultly evaporatable, per se, is used as the ink and a recording sheet having such high permeability as an absorbant

paper is used as the recording sheet and thereby to allow the ink to penetrate the recording sheet to obtain an apparently dried state thereof. This process, however, possesses such drawbacks that, though no clogging caused by evaporation of ink within nozzles occurs, the recording sheets usable therein come to be limited to those which readily absorb the ink and the consumers have to use, as the recording sheet, only such paper as designated by paper manufacturers for the purpose, accordingly the cost of paper to be borne by the consumers becomes relatively high.

Another measure known as a process for satisfying quick drying of ink is to add solvents having relatively high vapor pressure to ink and thereby to dry the ink as jetted or misted. In this process, however, though quick drying of ink can satisfactorily be attained, there involves such drawback that the ink retained at the top end of nozzle during suspension of the operation of such apparatus as ink jet printer having nozzles of inner diameter as small as about 50 to about 100 μm comes to evaporate and dry to cause clogging of the nozzles. On that account, it is necessary to keep the top end of nozzle covered or take the like measures during suspension of the use ink jet printer for the purpose of preventing the ink within the nozzle from evaporation and drying.

Still another measure known as a process for satisfying quick drying of ink is to incorporate into ink a small amount

of such solvent as having relatively good permeability through paper. However, no sufficient print quality could be obtained by the use of solvents in amounts as specified hitherto in the prior art processes, and the processes were found to be of very little real use.

The present invention has been made with the intention of obviating such drawbacks as associated with the prior art ink compositions, and an object of the invention is to provide an ink composition for ink jet printing, said composition having such characteristic feature that the ink possesses properties contrary to each other, that is, the ink itself is difficult to evaporate and dry to cause clogging when it is retained within nozzles but it immediately dries as soon as it is attached to the paper surface for ink jet printing and, moreover, that the thus attached ink forms clear and beautiful prints on paper of any kind.

The above-mentioned object of the present invention can be accomplished by providing an ink composition (hereinafter called "the present ink") for ink jet printing, characterized by comprising water, a dye selected from the group consisting of a water-soluble direct dye and a water-soluble acid dye and at least 20% by weight of a compound (hereinafter called "the present compound") represented by the following general formula [I].

$$C_nH_{2n+1}\text{-}(OCH_2CH_2)_m\text{-}OH$$

wherein m and n respectively represent $2 \leq m \leq 6$ and $m+1 \leq n \leq m+3$.

Generally, in order that the ink which attached to paper by ink jet printing process is allowed to form prints of good quality without ink blotting, it is believed to be sufficient that the surface tenstion of the ink is higher by about 45 dyn/cm than a critical surface tension of a recording sheet.

Apart from the case of certain recording sheets which have specially been prepared so as to impart excellent ink absorbing property thereto, however, such ink as referred to above does not serve at all as a quick drying ink in case where common a woodfree paper is used as the recording sheet.

Very important two factors necessary for the quick drying property referred to above are such that ink can uniformly wet the surface of a recording sheet and that the ink can quickly permeate through the recording sheet. With respect to the former factor, it is known that when the surface tension of ink has a relatively low value, for example, 45 dyn/cm, the factor is satisfied to a fairly satisfactory extent. With regard to the latter factor, however, by judging only from a value of surface tension of ink no one can ascertain whether the factor can be satisfied or not. For instance, such ink as incorporated with a surfactant of about a critical micell concentration so as to have its surface tension lower than a critical surface tension of a recording sheet certainly wets the recording sheet surface uniformly, but the ink requires a long period of time

to permeate through the recording sheet (that is, its quick drying performance becomes poor). On that account, the ink attached to the recording sheet surface increasingly spreads in the lateral direction of said sheet and finally ends in deterioration of print quality.

Accordingly, in case where ink is intended to have quick drying property to a satisfactory extent and give high print quality, it is desirable to incorporate into the ink such ingredients as capable of lowering a surface tension of the ink and simultaneously improving permeability through paper of said ink. The present compounds may be considered useful as the ingredients referred to above.

It has heretofore been known that a small amount of such ingredient, for example, as ethylene glycol-n-butyl ether, is incorporated into ink for the purpose of imparting antimicrobial property thereto or improving water resistance or light fastness of a dye contained in the ink (refer to Japanese Patent Laid-Open-to-Public Publn. No. 32566/1981 and Japanese Patent Publication No. 251/1972). By the use of the prior art ink compositions, however, it was not possible to satisfy simultaneously both favorable quick drying performance and high print quality.

One of the characteristic features of the present invention is that the present ink contains therein large amounts of the present compounds.

Another one of the features of the present invention is that water-soluble direct dye or acid dye is used in the ink of the present invention, and the object of the present invention cannot be accomplished when other kinds of dyes, for example, water-soluble basic dyes, are used in the present ink in place of the dye of the present invention.

Generally, what has heretofore found general acceptance is that ink having a low surface tension is inferior in projecting stability as well as in frequency response. In this connection, however, the present ink is superior in any of two characteristics mentioned above to any other conventionally known ink.

Typical examples of the present compounds are exemplified below.

1) $C_3H_7(OCH_2CH_2)_2OH$

2) $C_4H_9(OCH_2CH_2)_2OH$

3) $C_5H_{11}(OCH_2CH_2)_2OH$

4) $C_4H_9(OCH_2CH_2)_3OH$

5) $C_5H_{11}(OCH_2CH_2)_3OH$

6) $C_6H_{13}(OCH_2CH_2)_3OH$

7) $C_5H_{11}(OCH_2CH_2)_4OH$

8) $C_6H_{13}(OCH_2CH_2)_4OH$

9) $C_7H_{15}(OCH_2CH_2)_4OH$

10) $C_6H_{13}(CH_2CH_2)_5OH$

11) $C_7H_{15}(OCH_2CH_2)_5OH$

12) $C_8H_{17}(OCH_2CH_2)_5OH$

13) $C_7H_{15}(OCH_2CH_2)_6OH$

14) $C_8H_{17}(OCH_2CH_2)_6OH$

15) $C_9H_{19}(OCH_2CH_2)_6OH$

The present compounds are particularly preferable satisfy the relation of n=m+2, the concrete example of which are the

above-mentioned exemplified compounds 2), 4), 8), 11) and 14).

The present compound is used in an amount of at least 20% by weight based on the total amount of ink composition, and if the amount of the present compound used is less than 20% by weight no sufficient print quality is obtained, though the quick drying performance can be attained to a certain extent.

In the present invention, the present compounds can be used in combination of two or more, provided that the total amount of compounds used is at least 20% by weight based on the ink composition.

Given below, by way of illustration but not of limitation, are concrete examples of a variety of water-soluble direct dyes which are usable in accordance with the present invention.

| | | | |
|---|---|---|---|
| Yellow series: | C.I. Direct Yellow | 33 | (C.I. No. 29020) |
| | " | 39 | —— |
| | " | 44 | (C.I. No. 29000) |
| | " | 98 | —— |
| Red series: | C.I. Direct Red | 79 | (C.I. No. 29065) |
| | " | 81 | (C.I. No. 28160) |
| | " | 83 | (C.I. No. 29225) |
| Blue series: | C.I. Direct Blue | 1 | (C.I. No. 24410) |
| | " | 6 | (C.I. No. 22610) |
| | " | 15 | (C.I. No. 24400) |
| | " | 25 | (C.I. No. 23790) |
| | " | 71 | (C.I. No. 34140) |

| | | | |
|---|---|---|---|
| Blue series: | C.I. Direct Blue | 86 | (C.I. No. 74180) |
| | " | 90 | —— |
| | " | 98 | (C.I. No. 23155) |
| | " | 202 | —— |
| | " | 226 | (C.I. No. 22800) |
| Black series: | Direct Black | 17 | (C.I. No. 27700) |
| | " | 19 | (C.I. No. 35255) |
| | " | 32 | (C.I. No. 35440) |
| | " | 51 | (C.I. No. 27720) |
| | " | 108 | —— |

Typical examples of a wide variety of water-soluble acid dyes usable in the present invention are indicated below.

| | | | |
|---|---|---|---|
| Yellow color series: | C.I. Acid Yellow | 11 | (C.I. 18820) |
| | " | 42 | (C.I. 22910) |
| | " | 61 | —— |
| | " | 135 | —— |
| | " | 161 | —— |
| Red color series: | C.I. Acid Red | 6 | (C.I. 14680) |
| | " | 51 | (C.I. 45430) |
| | " | 52 | (C.I. 45100) |
| | " | 80 | (C.I. 68215) |
| | " | 87 | (C.I. 45380) |
| | " | 92 | (C.I. 45410) |
| | " | 94 | (C.I. 45440) |
| | " | 155 | (C.I. 18130) |

| | | | | |
|---|---|---|---|---|
| Red color series: | C.I. | Acid Red | 256 | —— |
| | | " | 318 | —— |
| Blue color series: | C.I. | Acid Blue | 9 | (C.I. 42090) |
| | | " | 22 | (C.I. 42755) |
| | | " | 40 | (C.I. 62125) |
| | | " | 62 | (C.I. 42780) |
| | | " | 93 | (C.I. 42780) |
| | | " | 102 | (C.I. 50320) |
| | | " | 113 | (C.I. 26360) |
| | | " | 120 | (C.I. 26400) |
| | | " | 167 | —— |
| | | " | 234 | —— |
| Black color series: | C.I. | Acid Black | 2 | (C.I. 50420) |
| | | " | 7 | (C.I. 26300) |
| | | " | 24 | (C.I. 26370) |
| | | " | 31 | (C.I. 17580) |
| | | " | 52 | (C.I. 15711) |
| | | " | 63 | —— |
| | | " | 107 | —— |
| | | " | 121 | —— |
| | | " | 155 | —— |
| | | " | 156 | —— |

In accordance with the present invention, it is preferable to incorporate a wetting agent into the present ink order to dissolve the water-soluble dye of the present invention to a

certain extent therein and lower the vapor pressure of the ink to restrain evaporation of the ink. Such wetting agents used for the above purpose may include aliphatic polyhydric alcohols, alkyl ethers of said aliphatic polyhydric alcohol, N-hydroxyalkyl-2-pyrrolidones, N-vinyl-2-pyrrolidone oligomer, N-hydroxyalkyl formamides, etc.

Particularly preferable wetting agents are those which have high entiring ratio into paper, which is defined as a volume of liquid of the agent which can permeate into the paper is large per unit volume of said paper. Entiring ratio into paper of the wetting agent is obtained by measuring an area at which the agent spreads when said agent is dropped in a definite amount on paper of a definite thickness.

The wetting agent used in accordance with the present invention is particularly preferably those which have the entiring ratio of at least 30%, preferably more than 40%.

Preferred wetting agent include ethylene glycol, diethylene glycol, triethylene glycol, trimethylene glycol, tetraethylene glycol, 1,4-butanediol, 1,5-pentanediol, thiodiethanol, propylene glycol, formamide, diethanolamine, N-hydroxyethyl-2-pyrrolidone, α-pyrrolidone, dimethylsulfoxide, etc. Of these wetting agents illustrated above, particularly preferred are ethylene glycol, trimethylene glycol, propylene glycol, formamide, diethanolamine and dimethylsulfoxide.

The wetting agent in accordance with the present invention

is preferably used in an amount, based on the present ink, of 5 - 60% by weight, particularly 20 - 60% by weight, since prevention of clogging due to evaporation of the ink at the top end of nozzle becomes insufficient when the agent is used in an amount of less than 5% by weight and the ink comes to increase in its viscosity if the amount of the agent used exceeds 60% by weight.

In this connection, the wetting agents according to the present invention may be used in combination of two or more, and they are also usable for the purpose of regulating such physical properties of the present ink as viscosity, etc.

The present ink comprising water, a water-soluble direct dye or a water-soluble acid dye and the present compound may optionally be incorporated with a variety of additives, if necessary. For instance, the present ink when it is anticipated to be stored for an extended period of time may be incorporated with antiseptics or antimolds for preventing or reducing the growth in the ink of bacteria or fungi. Of a variety of antiseptics heretofore known as useful for the above purpose, desired is, for example, 1,3,5-hexahydrotriazine derivative (Bacillat 35; produced and sold by Hoechst).

In addition thereto, the present ink may be incorporated with surfactants in order to regulate the surface tension of the ink, said surface tension predominating the desired wetting of the ink on a recording sheet. Without any particular limitation, any surfactants are usable for this purpose so long as they are not excessively low in solubility or they do not bring about interaction with dyes, and preferably usable as the surfactants in this sense are polyoxyalkylene and alkyl ethers thereof, siloxane-oxyalkylene copolymers, fluorine-contained surfactants, etc. These surfactants are commercially available.

The amount of such surfactant to be incorporated is generally less than 1%, particularly desirably ranging from 0.05 to 0.5% by weight based on the total amount of the present ink.

Furthermore, various inorganic or organic buffer can be incorporated into the present ink for the purpose of preventing the ink from change in pH due mainly to absorption of carbonic acid gas present in air during storage of the ink in an ink chamber or retention of the ink in nozzles. Desirable buffers include, for example, such carbonates as sodium carbonate and potassium carbonate, and from a practical standpoint they are suitably used in an amount of 0.1 - 5%, preferably 0.1 - 2% by weight based on the total amount of the present ink.

Still further, the present ink may contain various chelating agents for the purpose of masking metals and metal ions present in the ink. As individuals typical of the buffers used in accordance with the present invention, there may be mentioned sodium gluconate, ethylenediaminetetraacetic acid (EDTA), disodium salt of EDTA, trisodium salt of EDTA, tetrasodium salt of EDTA, sodium salt of diethylenetriaminopentaacetic acid, etc.

These buffers are suitably used in an amount of 0.1 - 5%, preferably 0.1 - 2% by weight based on the total amount of the present ink.

The present invention is illustrated below with reference to examples, but it should be construed that embodiments of the invention are not limited to those examples.

Example 1

| Composition | Weight(%) |
|---|---|
| C.I. Direct Black 32 | 3.0 |
| Ethylene glycol | 30.0 |
| Diethylene glycol mono-n-butyl ether [Exemplified compound 2)] | 30.0 |
| Potassium carbonate | 0.2 |
| Bacillat 35 | 0.2 |
| Distilled water | 36.6 |

The above-mentioned components were mixed together and stirred at room temperature for 3 hours. The resulting mixture was then filtered with a filter having a pore size of 0.6 to obtain sample 1 according to the present invention. Sample 1 had a viscosity of 6.20 cps and a surface tension of 31.5 dyn/cm as measured at ordinary temperatures.

Example 2

| Composition | Weight(%) |
|---|---|
| C.I. Direct Blue 25 | 1.5 |
| C.I. Direct Blue 226 | 1.5 |
| Formamide | 30.0 |
| Triethylene glycol mono-n-butyl ether [Exemplified compound 4)] | 30.0 |
| Potassium carbonate | 0.2 |
| Bacillat 35 | 0.2 |
| Tetrasodium salt of EDTA | 0.3 |
| Distilled water | 36.3 |

An ink composition obtained from the above-mentioned components which had been treated in the same manner as in Example 1 was designated Sample 2 of the present invention. Sample 2 had a viscosity of 5.20 cps. and a surface tension of 30.2 dyn/cm as measured at ordinary temperatures.

Example 3

| Composition | Weight(%) |
|---|---|
| C.I. Direct Black 19 | 3.0 |
| Ethylene glycol | 10.0 |
| Dimethyl sulfoxide | 30.0 |
| $C_8H_{17}(OCH_2CH_2)_5OH$ [Exemplified compound 12)] | 20.0 |
| Potassium carbonate | 0.2 |
| Bacillat 35 | 0.2 |

| | |
|---|---|
| EDTA - tetrasodium salt | 0.3 |
| Distilled water | 36.3 |

An ink composition obtained from the above-mentioned components which had been treated in the same manner as in Example 1 was designated Sample 3 of the present invention. Sample 3 had a viscosity of 5.63 cps. and a surface tension of 31.8 dyn/cm as measured at ordinary temperature (25°C).

Comparative Example 1

| Composition | Weight(%) |
|---|---|
| C.I. Direct Black 32 | 3.0 |
| Ethylene glycol | 40.0 |
| Diethylene glycol | 20.0 |
| Potassium carbonate | 0.2 |
| Bacillat 35 | 0.2 |
| EDTA - tetrasodium salt | 0.3 |
| Distilled water | 36.3 |

An ink composition containing the above-mentioned components was prepared and designated Comparative sample 1. Comparative sample 1 had a viscosity of 6.70 cps. and a surface tension of 51.8 dyn/cm as measured at ordinary temperature (25°C).

Comparative Example 2

| Composition | Weight(%) |
|---|---|
| C.I. Direct Black 32 | 3.0 |
| Ethylene glycol | 40.0 |
| Diethylene glycol mono-n-butyl ether [Exemplified compound 2)] | 10.0 |
| Potassium carbonate | 0.2 |
| Bacillat 35 | 0.2 |
| EDTA - tetrasodium salt | 0.3 |
| Distilled water | 46.3 |

An ink composition containing the above-mentioned components was obtained and designated Comparative sample 2 which was allowed, for comparison purposes, to contain the present compound 2) in an amount of less than 20% by weight. Comparative sample 2 had a viscosity of 5.42 cps. and a surface tension of 32.5 dyn/cm as measured at ordinary temperature (25°C).

Example 4

The ink compositions obtained in Examples 1 - 3 and Comparative Examples 1 and 2, respectively, were individually charged into an ink jet recording apparatus disclosed in Figs. 1 - 3 of U.S. Patent No. 4,189,734 Specification, said apparatus having been adjusted to parameters shown in Table 1, and then the apparatus was operated to effect ink jet recording using ten kinds of ordinary paper randomly collected, each was used as a recording sheet.

Table 1

| | |
|---|---|
| Printing speed | 2000 point/sec |
| Static pressure | -0.07 psi |
| Peak pressure of pulse | 25.3 psi |
| Pulse voltage | 120 V |
| Pulse width | 110 S |
| Diameter of orifice | 0.003 inch |

Results obtained in the performance of ink jet recording as aforesaid were as shown in Table 2.

Table 2

| | Drying speed as measured on 10 kinds of recording sheets | | | Print quality as determined on 10 kinds of recording sheets | |
|---|---|---|---|---|---|
| | 60 sec. or more | 3 - 10 sec. | Within 3 sec. | Good | Poor |
| Present Sample 1 | 0 | 0 | 10 | 10 | 0 |
| " 2 | 0 | 0 | 10 | 10 | 0 |
| " 3 | 0 | 0 | 10 | 10 | 0 |
| Compar. Sample 1 | 9 | 1 | 0 | 3 | 7 |
| " 2 | 0 | 4 | 6 | 5 | 5 |

From the results shown in Table 2, it is understood that samples of the present invention are all superior both in drying speed and print quality to the comparative samples.

Example 5

| Composition | Weight(%) |
| --- | --- |
| C.I. Acid Black 24 | 3.0 |
| Ethylene glycol | 30.0 |
| Diethylene glycol mono-n-butyl ether [Exemplified compound 2)] | 30.0 |
| Potassium carbonate | 0.2 |
| Bachillat 35 (a preservative produced and sold by Hoechst) | 0.2 |
| Distilled water | 36.6 |

The above-mentioned constituents of an ink composition were mixed together and stirred at room temperature for 3 hours, and the resulting mixture was filtered with a filter having a pore size of 0.6 μ to obtain Sample 1 of the present invention. Sample 5 thus obtained was found to have a viscosity of 6.28 cps, and a surface tension of 31.8 dyn/cm.

Example 6

| Composition | Weight(%) |
| --- | --- |
| C.I. Acid Blue 102 | 3.0 |
| Ethylene glycol | 20.0 |
| Diethylene glycol | 10.0 |

| | |
|---|---|
| Triethylene glycol mono-n-butyl ether [Exemplified compound 4)] | 30.0 |
| Potassium carbonate | 0.2 |
| Bacillat 35 | 0.2 |
| Tetrasodium salt of EDTA | 0.3 |
| Distilled water | 36.3 |

The above-mentioned constituents of an ink composition were treated in the same manner as in Example 5 to obtain Sample 6 of the present invention. Sample 6 thus obtained was found to have a viscosity of 5.28 and a surface tension of 33.3 dyn/cm as measured at ordinary temperature (25°C).

Example 7

| Composition | Weight(%) |
|---|---|
| C.I. Acid Red 87 | 3.0 |
| Diethylene glycol | 10.0 |
| Dimethyl sulfoxide | 30.0 |
| Exemplified compound 12) | 20.0 |
| Potassium carbonate | 0.2 |
| Bacillat 35 | 0.2 |
| EDTA - tetrasodium salt | 0.3 |
| Distilled water | 36.3 |

An ink composition comprising the above-mentioned constituents was prepared in the same manner as in Example 6, and the composition thus obtained was designated Sample 7 of the

present invention. Sample 7 thus obtained was found to have a viscosity of 5.60 cps and a surface tension of 31.6 dyn/cm as measured at ordinary temperature (25°C).

Comparative Example 3

| Composition | Weight(%) |
|---|---|
| C.I. Acid Black 24 | 3.0 |
| Ethylene glycol | 40.0 |
| Diethylene glycol | 20.0 |
| Potassium carbonate | 0.2 |
| Bacillat 35 | 0.2 |
| EDTA - tetrasodium salt | 0.3 |
| Distilled water | 36.3 |

An ink composition comprising the above-mentioned constituents was prepared, and the composition thus obtained was designated Comparative sample 3 which was found to have a viscosity of 6.80 cps and a surface tension of 51.9 dyn/cm as measured at ordinary temperature (25°C).

Comparative Example 4

| Composition | Weight(%) |
|---|---|
| C.I. Acid Black 24 | 3.0 |
| Ethylene glyocl | 40.0 |
| Diethylene glycol mono-n-butyl ether [Exemplified compound 2)] | 10.0 |

| | |
|---|---|
| Potassium carbonate | 0.2 |
| Bacillat 35 | 0.2 |
| EDTA - tetrasodium salt | 0.3 |
| Distilled water | 46.3 |

For comparison, an ink composition comprising the above-mentioned constituents including the present compound but using in an amount of less than 20% by weight was prepared, and the composition thus obtained was designated Comparative sample 4. Comparative sample 4 was found to have a viscosity of 5.48 cps and a surface tension of 32.6 dyn/cm as measured at ordinary temperature (25°C).

Example 8

After having been adjusted to parameters shown in Table 3, such ink jet recording apparatuses as disclosed in Figs. 1 - 3 of U.S. Patent No. 4,189,734 were individually charged with each of ink compositions obtained in Examples 5 - 7 and Comparative Examples 3 - 4. Using each of the apparatuses, ink jet printing was effected on each of ten kinds of sheets of ordinary paper.

Table 3

| | | |
|---|---|---|
| Printing speed | 2000 | point/sec |
| Static pressure | -0.07 | psi |
| Pulse peak pressure | 25.3 | psi |
| Pulse voltage | 120 | V |
| Pulse width | 110 | S |
| Diameter of orifice | 0.003 | inch |

The results obtained are shown in Table 4.

Table 4

| | Drying speed of ink on 10 kinds of recording sheets | | | Quality of print formed on 10 kinds of recording sheets | |
|---|---|---|---|---|---|
| | 60 sec. or more | 3 - 10 sec. | Within 3 sec. | Good | Poor |
| Present sample 5 | 0 | 0 | 10 | 10 | 0 |
| " 6 | 0 | 0 | 10 | 10 | 0 |
| " 7 | 0 | 0 | 10 | 10 | 0 |
| Compar. sample 3 | 9 | 1 | 0 | 3 | 7 |
| " 4 | 0 | 4 | 6 | 5 | 5 |

From the results shown in Table 4, it is understood that all the samples of the present invention are superior in both

drying speed and quality of print to the comparative samples.

CLAIMS:

1. An ink composition for ink jet printing comprising; water and a water-soluble direct or acid dye, characterized in that said composition additionally contains at least 20% by weight of a compound having the formula [I]:

$$C_nH_{2n+1}\text{—}(OCH_2CH_2)_m\text{—}OH$$

wherein m and n are numbers such that $2 \leqq m \leqq 6$, and $m+1 \leqq n \leqq m+3$.

2. An ink composition according to Claim 1, characterized in that n=m+2.

3. An ink composition according to Claim 1 or 2 characterized in that said composition further comprises a wetting agent, antiseptic, antimold, chelating agent and/or a buffer.

4. An ink composition according to Claim 3, characterized in that the wetting agent is an aliphatic polyhydric alcohol, an alkyl ester of an aliphatic polyhydric alcohol, an N-hydroxyalkyl-2-pyrrolidone, an N-vinyl-2-pyrrolidone oligomer or an N-hydroxyalkyl formamide.

5. An ink composition according to Claim 3, characterized in that the wetting agent is ethylene glycol, diethylene glycol, triethylene glycol, trimethylene glycol, tetraethylene glycol, 1,4-butanediol, 1,5-pentanediol, thiodiethanol, propylene glycol, formamide, diethanolamine, N-hydroxyethyl-2-pyrrolidone, α-pyrrolidone, or dimethylsulfoxide.

6. An ink composition according to any of Claims 3 to 5 characterized in that the antiseptic is a 1,3,5-hexahydrotriazine derivative.

7. An ink composition according to any of Claims 3 to 6 characterized in that the chelating agent is sodium gluconate, ethylenediaminetetraacetic acid (EDTA), the disodium salt of EDTA, the trisodium salt of EDTA, the tetrasodium salt of EDTA or the sodium salt of diethylene-triamino pentaacetic acid.

8. An ink composition according to any of Claims 3 to 7 characterized in that the buffer is a carbonate.

9. An ink composition according to Claim 8 characterized in that the carbonate is sodium carbonate or potassium carbonate.

10. An ink composition according to any preceding Claim characterized in that the compound of formula [I] is

$C_4H_9(OCH_2CH_2)_2OH$
$C_4H_9(OCH_2CH_2)_3OH$
$C_6H_{13}(OCH_2CH_2)_4OH$
$C_7H_{15}(OCH_2CH_2)_5OH$
$C_8H_{17}(OCH_2CH_2)_6OH$

European Patent Office

# EUROPEAN SEARCH REPORT

0084714 Application number

EP 82 30 6458

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-1 378 894 (DICK) * Claim 1; page 3, lines 44-82, 95-105 * | 1-3,10 | C 09 D 11/00 |
| | --- | | |
| X | FR-A-2 388 870 (MEAD CORP.) * Claims 1-5,10 * | 1-4,10 | |
| | --- | | |
| X | US-A-4 229 219 (E.A. METZ) * Claims 1-3 * | 1,2,10 | |
| | ----- | | |
| | | | **TECHNICAL FIELDS SEARCHED (Int. Cl. 3)** |
| | | | C 09 D 11/00<br>C 09 D 7/00 |

The present search report has been drawn up for all claims

| Place of search | Date of completion of the search | Examiner |
|---|---|---|
| THE HAGUE | 13-04-1983 | DE ROECK R.G. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document